# FASCICULE DE BREVET EUROPEEN

(11) **EP 0 443 928 B1**
(45) Date de publication et mention de la délivrance du brevet: **30.08.1995**
(21) Numéro de dépôt: 91400417.1
(22) Date de dépôt: 18.02.1991
(51) Int. Cl.: G09B 9/05

(54) **Procédé et dispositif d'entraînement à la conduite de véhicules**
Verfahren und Vorrichtung zur Ausbildung für das Führen von Fahrzeugen
Training method and device for vehicle driving

(30) Priorité: 20.02.1990 FR 9002006
(43) Date de publication de la demande: 28.08.1991
(73) Titulaire: FAROS, F-22300 Lannion (FR)
(72) Inventeur: Langlais, Bernard, F-954320 Thiais (FR); Saunier, Christian, F-95120 Ermont (FR)
(74) Mandataire: Thibon-Littaye, Annick

(56) Documents cités:
- EP-A- 0 183 497
- EP-A- 0 404 381
- DE-A- 3 107 311
- DE-A- 3 306 452
- DE-A- 3 409 824
- DE-A- 3 816 543
- DE-U- 9 007 290
- US-A- 4 846 686

## Description

La présente invention concerne les équipements et techniques qui permettent de simuler les conditions de pilotage d'engins mobiles pour assurer l'entraînement d'élèves à la conduite de tels engins. Elle s'adresse plus particulièrement aux applications concernant la conduite automobile, notamment celle des voitures de tourisme et autres véhicules terrestres, qu'il s'agisse de véhicules équipés de roues ou de véhicules chenillés.

Diverses techniques plus ou moins complexes et coûteuses ont déjà été proposées pour simuler un paysage en défilement devant un conducteur élève s'entraînant dans un poste de pilotage fixe. On utilise pour cela un écran de visualisation d'images que l'on place face au poste de pilotage et sur lequel on visualise des séquences d'images extraites d'enregistrements préalables, qui peuvent être soit des enregistrements cinématographiques ou vidéo de paysages réels comme dans la demande de brevet français n° 83 20136 déposée le 15 décembre 1983, publiée sous le n° 2 556 866, soit des images de synthèse.

Par le document EP-A-0 183 497, on connaît un procédé selon lequel les vues de simulation tant frontales que de rétrovision, sont produites à partir d'un simple enregistrement vidéo d'images (séquence d'images), réalisé sur le terrain au moyen d'une caméra montée à bord d'un véhicule conduit par un conducteur expérimenté. Ces images sont visualisées sur l'écran d'un dispositif d'affichage, les images de vue de rétrovision étant incrustées dans celles correspondant à la vue frontale.

Ainsi, le contenu de chacune de ces images est invariable, c'est-à-dire qu'il ne peut être modifié. Seules la vitesse de défilement des images et leur position latérale sur l'écran de visualisation sont modifiées en fonction des commandes appliquées par l'élève aux organes de conduite du poste de pilotage de simulation.

Il en résulte que le réalisme avec lequel le paysage entourant le véhicule est simulé, est nettement dégradé, puisque l'angle de vue ainsi que la taille des objets de ce paysage ne sont pas modifiés lorsque la trajectoire du véhicule simulé s'écarte de celle du véhicule réel qui a servi à l'enregistrement de la séquence d'image vidéo.

A cette fin, l'invention a pour objet un procédé pour l'entraînement à la conduite de véhicules suivant lequel on réalise une vue frontale et au moins une vue de rétrovision simulées en visualisant sur des moyens d'écran disposés face à un poste de pilotage pour un conducteur élève, une séquence d'images principales frontales, ainsi qu'au moins une séquence d'images secondaires de rétrovision et on fait évoluer ces vues en fonction de commandes déterminées depuis ledit poste de pilotage, caractérisé en ce que lesdites images principales et lesdites images secondaires sont des images de synthèse générées par un calculateur à partir d'une base de données contenant la description d'un circuit routier en trois dimensions ; on rend visible ladite vue de rétrovision simulée produite à partir de ladite séquence d'images secondaires, à l'aide d'un moyen matériel de simulation de rétroviseur réglable en orientation, et on modifie ladite vue de rétrovision en fonction de l'orientation dudit moyen matériel de simulation de rétroviseur de telle sorte que cette vue évolue sensiblement comme celle d'un rétroviseur réel de véhicule.

L'invention se prête particulièrement bien à la reproduction de l'environnement visuel du conducteur par la technique de génération d'images de synthèse. Les images principales et les images secondaires peuvent être simultanément générées sur un même écran par un calculateur à partir d'une base de données contenant la description d'un circuit routier en trois dimensions. Le fait de générer toutes ces images sur un même écran est notamment avantageux et conduit à une représentation simplifiée ou stylisée des images de rétrovision par rapport à l'image principale frontale. On comprend par ailleurs que ces images secondaires sont générées et incrustées dans l'image principale à partir d'informations extraites de la base de données pour correspondre à des champs de vision à l'arrière du conducteur, comme c'est le cas pour un véritable poste de pilotage d'un véhicule automobile, alors que l'image principale est générées à partir d'informations correspondant à un champ de vision vers l'avant.

L'invention a également pour objet un dispositif pour l'entraînement à la conduite automobile comportant, face à un poste de pilotage pour un conducteur élève, au moins un écran de visualisation, des premiers moyens de génération d'une séquence d'images principales frontales fonction des commandes dudit poste de pilotage, au moins des deuxièmes moyens de génération d'au moins une première séquence d'images secondaires de rétrovision inscrustée dans ladite séquence d'images frontales sur une première portion dudit écran et des premiers moyens optiques de prélèvement et de renvoi de ladite première séquence d'images secondaires vers un premier moyen matériel de simulation de rétroviseur simulant un rétroviseur central pour délivrer une vue de rétrovision centrale, caractérisé en ce que lesdites images sont générées par un calculateur à partir d'une base de données contenant la description d'un circuit routier en trois dimensions, en ce que ledit premier moyen de simulation de rétroviseur est réglable en orientation et en ce qu'il est associé à des moyens de réglage de vue sensibles à l'orientation de ce premier moyen pour modifier ladite vue de rétrovision centrale en fonction de ladite orientation.

Dans un mode de réalisation préféré d'un tel dispositif, l'écran de moniteur vidéo est intégré dans un carter qui cache l'écran en partie basse au niveau d'images secondaires correspondant à au moins un rétroviseur latéral et ce carter contient un miroir de renvoi d'images secondaires vers ledit rétroviseur latéral.

Dans une variante de réalisation de l'invention, le dispositif comporte en outre deux écrans de moniteur vidéo propres à restituer des images principales latérales de part et d'autre de l'image principale frontale.

On décrira maintenant plus en détail une forme de réalisation particulière de l'invention qui en fera mieux comprendre les caractéristiques essentielles et les avantages, étant entendu toutefois que cette forme de réalisation est choisie à titre d'exemple et qu'elle n'est nullement limitative. Sa description est illustrée par les dessins annexés, dans lesquels :
- la figure 1 représente schématiquement les différents champs de vision d'un conducteur au volant d'un véhicule automobile ;
- la figure 2A représente schématiquement en perspective un dispositif de simulation selon l'invention permettant de donner une représentation de l'environnement visuel du conducteur, et la figure 2B représente une vue agrandie d'un détail de la figure 2A ;
- la figure 3A représente schématiquement de face l'écran du dispositif représenté à la figure 1 et les figures 3B et 3C illustrent schématiquement en vue de dessus les moyens de prélèvement et de renvoi des images secondaires selon l'invention ;
- la figure 4 représente une vue en perspective d'une console de visualisation selon l'invention illustrant plus particulièrement les trajets optiques ;
- la figure 5 représente une vue en perspective d'un deuxième mode de réalisation d'un dispositif de simulation selon l'invention ;
- et la figure 6 représente le schéma synoptique du fonctionnememt du dispositif selon l'invention.

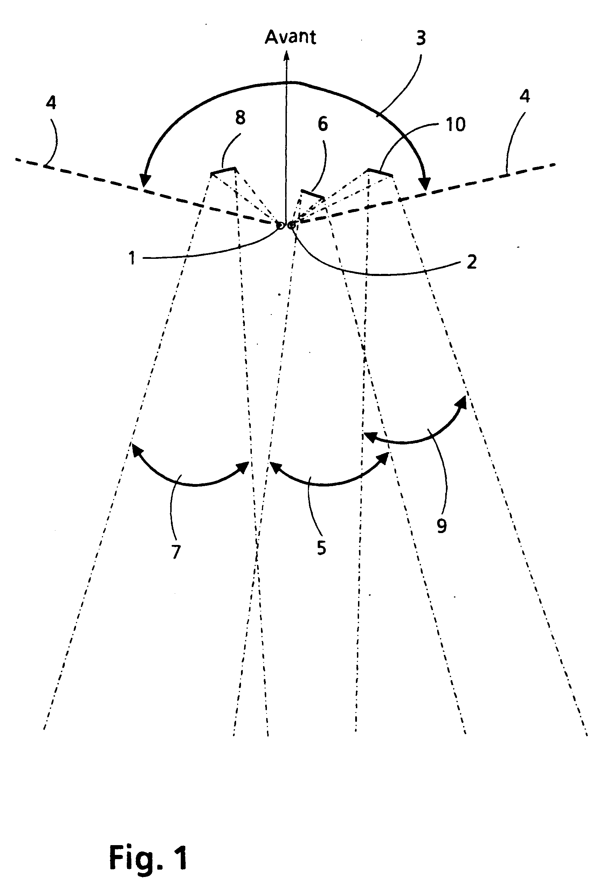

La figure 1 illustre schématiquement les différents champs de vision dont dispose un conducteur de véhicule automobile et que l'invention cherche à reproduire dans son dispositif de simulation.

Ces champs de vision sont définis par rapport à la position des deux yeux 1 et 2 du conducteur et on y retrouve :
- un champ de vision frontal direct désigné par la flèche 3 vers l'avant du véhicule et limité par les lignes en traits interrompus 4 ;
- un champ de rétrovision central arrière, désigné par la flèche 5, et renvoyé par l'intermédiaire d'un rétroviseur intérieur 6 aux yeux du conducteur ;
- un premier champ de rétrovision latéral arrière, désigné par la flèche 7, et renvoyé par l'intermédiaire d'un premier rétroviseur extérieur latéral 8 aux yeux du conducteur ;
- et éventuellement un second champ de rétrovision latéral arrière désigné par la flèche 9, et renvoyé par l'intermédiaire d'un second rétroviseur extérieur latéral 10 aux yeux du conducteur.

Sur la représentation de la figure 1, les champs de rétrovision correspondent à ceux d'un véhicule équipé d'une conduite à gauche, le premier champ de rétrovision latéral arrière étant celui délivré par le rétroviseur extérieur gauche 8 et le second champ de rétrovision latéral arrière 9 étant celui délivré par le rétroviseur extérieur droit 10.

Dans le cas d'un véhicule équipé d'une conduite à droite, le premier champ de rétrovision latéral arrière serait celui délivré par un premier rétroviseur extérieur latéral droit et le second champ de rétrovision latéral arrière serait celui délivré par un second rétroviseur extérieur latéral gauche.

Le choix du nombre d'images de rétrovision dépend essentiellement du type de véhicule dont on souhaite simuler la conduite. On peut par exemple ne générer que les deux images de rétrovision latérale dans le cas d'un poids lourd ou générer l'image de rétrovision centrale et la première image de rétrovision latérale si l'on souhaite simuler un véhicule non pourvu d'un deuxième rétroviseur latéral.

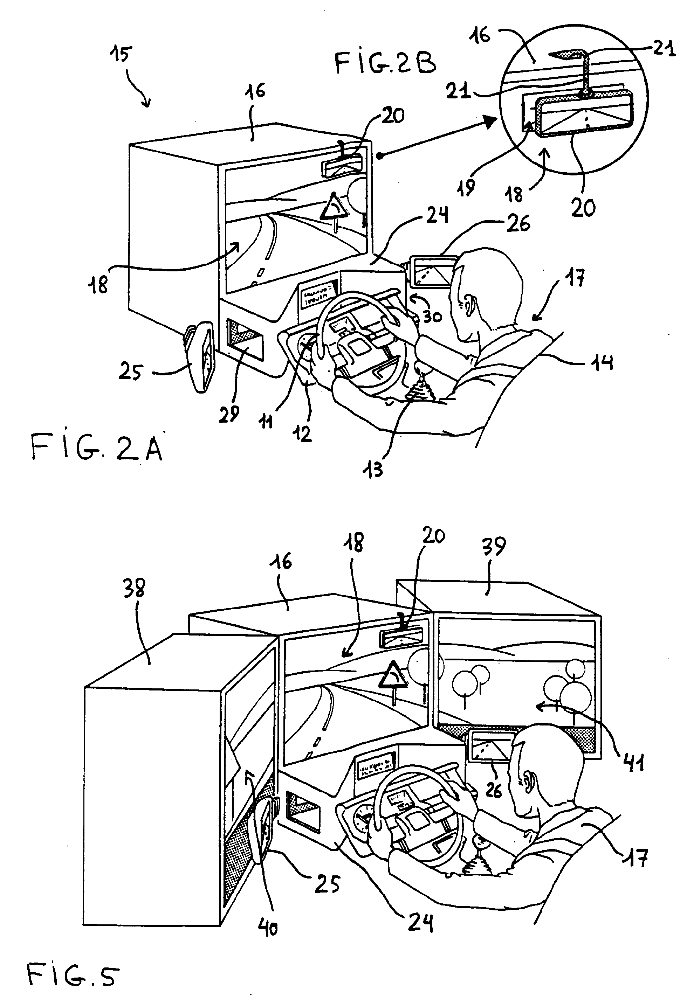

Le figure 2A représente partiellement un poste de pilotage d'un simulateur de conduite automobile faisant apparaître la console de visualisation de ce poste de pilotage. Le poste de pilotage d'un simulateur automobile comporte, outre les instruments de conduite reproduits d'un véhicule automobile tels que le volant 11, le tableau de bord 12, le levier de changement de vitesse 13, le frein à main, le pédalier comportant une pédale d'accélérateur, de frein et d'embrayage et le siège 14, une console de visualisation 15 matérialisée sous la forme d'un écran de télévision 16, un haut-parleur, un module de restitution des effets physiques au volant, et un clavier de commande à la disposition d'un instructeur pour permettre de faire évoluer les scénarios et les paysages restitués sur l'écran 16 ; un conducteur élève 17 prenant place sur le siège 14 comme il le ferait dans un véhicule automobile.

De manière classique, la commande du dispositif est placée sous le contrôle d'un calculateur (non représenté) qui reçoit des informations du clavier de commande de l'instructeur, des informations sur la position du frein à main, des informations indiquant, en fonction de la position du levier de vitesse 13, la vitesse sélectionnée par le conducteur élève 17, et des informations provenant de capteurs du pédalier indiquant le degré d'enfoncement des pédales d'accélérateur, de frein ou d'embrayage, ou une action simultanée sur plusieurs de ces pédales. Un tel simulateur comporte également généralement un module de restitution des effets physiques au volant, muni d'un capteur détectant l'orientation angulaire du volant 11 et un organe moteur permettant de donner une restitution des efforts de réaction de la direction et des roues sur le volant 11.

En fonction de toutes ces informations, le calculateur commande le moteur du module de restitution des effets physiques au volant pour simuler les efforts de réaction de la direction sur le volant, les voyants et cadrans apparaissant sur le tableau de bord 12, les effets sonores produits par le haut-parleur, et les images à afficher sur l'écran 16. Le calculateur comprend également une électronique d'interface avec les équipements du poste de pilotage.

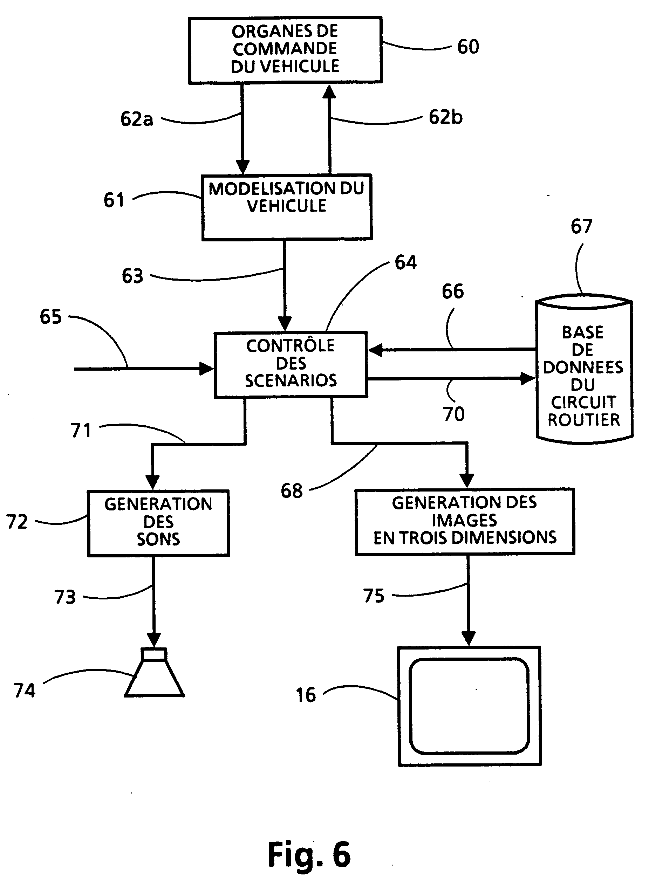

Le calculateur comporte des premiers moyens de génération d'une image principale frontale de synthèse 18 destinée à être projetée sur l'écran 16. Ces premiers moyens de génération d'images utilisent pour ce faire une base de données (figure 6) à partir de laquelle les images sont générées. Cette base de données contient la description en trois dimensions d'un ou plusieurs circuits routiers constitués de routes, de bâtiments, d'arbres, de véhicules, etc. Elle permet de disposer de scènes de conduite en ville, sur route et sur autoroute. Lors de la simulation, le calculateur extrait de la base de données les éléments permettant de reconstituer la vision frontale que doit avoir le conducteur élève 17 en fonction de l'évolution de la position et de l'orientation du véhicule sur le circuit routier. Cette image frontale principale correspond au champ de vision direct du conducteur vers l'avant du véhicule désigné par la référence 3 à la figure 1.

Le calculateur comporte également des deuxièmes moyens de génération d'une première image secondaire de rétrovision 19 (figure 2B) destinée à être incrustée dans l'image principale frontale 18 et constituant le champ de rétrovision central arrière désigné par la référence 5 à la figure 1. Un rétroviseur central 20 est disposé devant cette première image secondaire de rétrovision et constitue des premiers moyens de prélèvement et de renvoi optique de cette première image secondaire. Le rétroviseur 20 est à cet effet constitué d'une lentille de Fresnel assurant un transfert optique tel que l'image secondaire 19 est déviée en direction des yeux du conducteur élève 17. Cette lentille de Fresnel a pour objectif de rendre directionnelle l'image 19 pour obliger le conducteur élève à régler le rétroviseur 20 avant de commencer une séance de conduite, et ceci de la même manière qu'un conducteur doit régler son rétroviseur avant de conduire un véhicule réel. Ce système de lentille de Fresnel peut être remplacé, dans une autre variante, par un filtre directif, ou tout autre système ayant la même fonction, comme par exemple une modification de l'image secondaire incrustée dans l'image principale sous l'effet de l'action par l'élève sur un système de réglage ayant pour effet de modifier l'image incrustée par action sur les deuxièmes moyens de génération. Le rétroviseur 20 peut être par exemple fixé au moyen d'une patte de fixation 21 sur la partie supérieure de l'écran 16. La patte de fixation 21 dispose de préférence d'un système de réglage à rotule semblable à celui d'un rétroviseur réel.

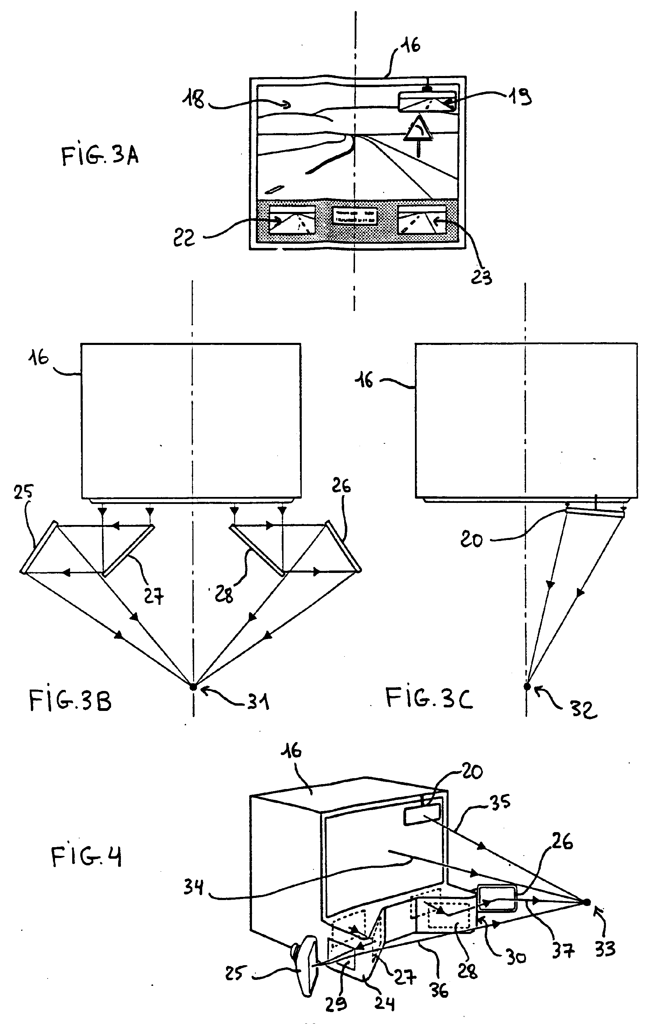

Le calculateur comporte également des troisièmes moyens de génération d'une deuxième image secondaire de rétrovision (22 figure 3A), incrustée dans l'image principale frontale 18 et reproduisant un premier champ de rétrovision latéral arrière désigné par la référence 7 à la figure 1, ainsi qu'éventuellement des quatrièmes moyens de génération d'une troisième image secondaire de rétrovision (23 figure 3A), incrustée dans l'image principale frontale 18 et reproduisant le deuxième champ de rétrovision latéral arrière désigné par la référence 9 à la figure 1. Ces deux images secondaires de rétrovision latérale sont de préférence incrustées dans la partie basse de l'image frontale 18.

La console de visualisation 15 comporte également un carter 24 constituant des deuxième et troisième moyens de prélèvements et de renvoi optique des deuxième et troisième images secondaires respectivement vers un premier rétroviseur latéral 25 et un second rétroviseur latéral 26. Ces rétroviseurs peuvent consister en des rétroviseurs classiques équipant habituellement les véhicules automobiles et sont fixés par exemple de part et d'autre de l'écran 16 sur ses parois latérales. Les rétroviseurs 25 et 26 sont réglables dans leur orientation, obligeant le conducteur élève 17 à les orienter convenablement pour voir la totalité des images de rétrovision 22 et 23 générées sur l'écran 16.

Le carter 24 est conformé de sorte à masquer les images secondaires 22 et 23 à la vision directe du conducteur élève 17. Il est équipé intérieurement de deux miroirs 27 et 28 renvoyant respectivement les images 22 et 23 vers le rétroviseur 25 ou 26 par l'intermédiaire d'une ouverture 29 ou 30 ménagée dans une face latérale gauche ou droite du carter 24.

Dans une variante de réalisation des deuxième et troisième moyens de prélèvement et de renvoi optique des images secondaires latérales, les miroirs 27 et 28 peuvent être remplacés par des prismes déterminant les trajets optiques entre l'écran et les rétroviseurs.

La figure 3A représente schématiquement les positions respectives d'incrustation des images secondaires de rétrovision 19, 22 et 23 dans l'image principale 18 visualisée sur l'écran 16.

La figure 3B montre schématiquement en vue de dessus les chemins optiques suivis par les images de rétrovision latérale 22 et 23 à partir de l'écran 16 jusqu'aux yeux du conducteur élève représentés par le point 31. On voit que chacune de ces images de rétrovision latérale est tout d'abord renvoyée en étant déviée par l'un des miroirs 27 ou 28 vers le rétroviseur latéral associé 25 ou 26 qui lui-même renvoie l'image correspondante vers le point 31.

La figure 3C montre schématiquement en vue de dessus le chemin optique parcouru par la première image de rétrovision 19, correspondant au champ de rétrovision central arrière, depuis l'écran 16 jusqu'aux yeux du conducteur élève représentés schématiquement par le point 32. On voit que cette première image de rétrovision traverse le rétroviseur 20 qui est constitué d'une lentille de Fresnel et qui, lorsqu'il est bien orienté, dévie cette image vers le point 32, permettant ainsi au conducteur élève de voir l'image de rétrovision 19.

En référence à la figure 4, représentant une vue en perspective de la console de visualisation 15 illustrant plus particulièrement les trajets optiques suivis depuis l'écran 16 jusqu'aux yeux d'un conducteur élève représentés par un point 33, on voit que l'image principale frontale suit un chemin optique direct 34 alors que les images secondaires incrustées dans l'image principale sont déviées pour être renvoyées au point 33. La première image de rétrovision centrale suit un chemin 35 après avoir traversé le rétroviseur 20, et les deux images secondaires de rétrovision latérale suivent respectivement des chemins 36 ou 37 qui, après avoir été réfléchis respectivement par les miroirs 27 ou 28 du carter 24, sont renvoyées, après avoir traversé l'une des ouvertures 29 ou 30, par le rétroviseur latéral extérieur 25 ou 26 qui leur est associé vers le point 33.

Les figures 3B, 3C et 4 qui illustrent la convergence des images de rétrovision présentées dans le rétroviseur intérieur 20 et dans les rétroviseurs extérieurs 25 et 26 vers le point représentant les yeux du conducteur élève, font apparaître clairement comment selon l'invention on parvient à restituer à la vision du conducteur élève, les différents champs de vision et de rétrovision, tel que représenté à la figure 1, reproduisant ainsi en simulation l'environnement visuel du véhicule permettant d'être très proche des conditions réelles de la conduite automobile.

Selon une variante de réalisation du dispositif selon l'invention, on prévoit que les rétroviseurs 20, 25 et 26 soient réglables dans leur orientation de manière à reproduire le plus exactement possible les conditions réelles de la conduite automobile, le conducteur élève étant amené à modifier leur orientation en fonction, par exemple, de sa taille et de sa position par rapport au poste de conduite afin de voir les images secondaires dans leur intégralité.

Selon une autre variante, il est particulièrement avantageux de prévoir que les images secondaires 19, 22 et 23 soient incrustées dans l'image principale 18 sur des portions de l'écran 16 qui sont dimensionnées de manière à ce que l'image vue par l'élève conducteur dans un rétroviseur, soit plus réduite que l'image secondaire incrustée dans l'image principale 18. De ce fait en modifiant l'orientation de ces rétroviseurs, le conducteur élève modifie l'orientation de ces champs de vision arrière et ainsi se trouve dans des situations de simulation très proches de la réalité.

Les images secondaires sont dans ce cas prélevées partiellement par les moyens de prélèvement et de renvoi qui leur sont associés, permettant ainsi par le réglage d'un rétroviseur de modifier la portion prélevée de l'image secondaire qui lui est associée.

On peut également prévoir selon un autre mode de réalisation, de remplacer les rétroviseurs 20, 25 et 26 par des écrans supplémentaires de taille correspondant à celle des rétroviseurs et de générer les images de rétrovision correspondantes directement sur ces écrans.

La figure 5 représente une vue en perspective partielle d'une variante de réalisation d'un poste de pilotage de simulation de conduite selon l'invention comportant deux écrans latéraux 38 et 39 situés de part et d'autre de l'écran 16 et permettant d'effectuer l'affichage d'une image large simulant non seulement sur l'écran 16 l'image principale frontale 18 mais également sur les écrans 38 et 39 des images latérales 40 et 41 correspondant aux champs de vision latéraux du véhicule, complétant ainsi l'environnement du circuit routier en reproduisant un champ de vision direct complet du conducteur tel que celui désigné par la référence 3 à la figure 1.

Le calculateur comporte à cet effet des cinquièmes moyens de génération d'images de synthèse permettant la production des images 40 et 41. Dans la représentation de la figure 5, les écrans 38 et 39 sont disposés par rapport à l'écran 16 de manière à élargir le champ de vision direct du conducteur élève 17. Dans cette variante, on peut prévoir de supprimer les rétroviseurs latéraux 25 et 26 et d'incruster les images secondaires de rétrovision 22 ou 23 dans la partie basse de l'écran 38 ou 39.

On peut également prévoir en fonction de la visualisation souhaitée, d'orienter ces écrans latéraux 38 ou 39 et de définir les cinquièmes moyens de génération d'images en fonction de cette orientation, de sorte que ces écrans visualisent soit le champ de vision direct du conducteur de manière élargie, tel que représenté à la figure 5, soit les champs de vision latéraux du véhicule tels que ceux définis en condition réelle par la vision à travers les fenêtres latérales du véhicule.

La figure 6 représente un synoptique de fonctionnement du simulateur qui, à partir des organes de commande 60 du véhicule, constitués par le volant 11, l'accélérateur, l'embrayage, le frein, la boîte de vitesse, et les commandes du tableau de bord 12, transmet les actions du conducteur par une liaison 62a à un programme de modélisation du véhicule 61 qui permet au calculateur de calculer les réactions du véhicule aux commandes du conducteur élève. Ces réactions sont transmises par une liaison 62b aux organes de commande 60 du véhicule, de façon à reproduire les effets physiques au volant et de commander les voyants et cadrans du tableau de bord. Ce calcul permet d'envoyer, par la liaison 63, les informations concernant la position et l'angle du véhicule à un moyen de contrôle des scénarios 64. Ce moyen de contrôle des scénarios reçoit, par une liaison 65, les commandes sélectionnées par l'instructeur pour influencer le déroulement du scénario, de façon à reproduire des conditions de circulation variées et des situations à risque constituées par des obstacles visualisés en vision frontale ou en rétrovision. De plus, le moniteur peut sélectionner des effets visuels permettant de reproduire des conditions particulières de conduite, telles que par exemple la conduite de nuit, sous la pluie ou la neige, par temps de brouillard, etc. Le moyen de contrôle des scénarios 64 reçoit par une liaison 66, les données utiles à la génération des images principales et secondaires en provenance d'une base de données 67 dans laquelle sont stockées différentes représentations de circuits routiers permettant de reproduire des conditions de circulation en ville, sur route et autoroute. Le moyen de contrôle des scénarios 64 envoie, par une liaison 68, des informations nécessaires à la génération d'images en trois dimensions à un moyen de génération de ces images 69 qui permet au calculateur d'effectuer le calcul des images principales et secondaires, pour la vision frontale, pour la rétrovision centrale et pour les rétrovisions latérales. Le moyen de contrôle des scénarios 64 envoie, par une liaison 70, les informations nécessaires à la mise à jour de la base de données 67 en fonction du scénario. De même une liaison 71, permet à ce moyen de contrôle des scénarios 64 d'envoyer à un moyen de génération des sons 72 les informations permettant de générer les bruits moteur, boîte de vitesse, roulement et avertisseur sonore qui seront envoyés par une liaison 73 à un haut-parleur 74.

Le générateur d'images en trois dimensions 69 envoie par l'intermédiaire d'une liaison 75 les images à visualiser sur l'écran 16 de la console de visualisation. Ces images sont constituées à la fois de l'image principale de vision frontale et des images secondaires de rétrovision qui seront incrustées dans l'image principale.

La génération des images s'effectue en prélevant dans la base de données 67 les images correspondant à l'angle de vision de l'image à générer à partir de la position simulée du véhicule sur le circuit routier contenu dans la base de données. A partir de cette position, le système détermine les informations à prélever pour la génération des images, en tenant compte de l'angle de vision associé à l'image à générer et du point de convergence du champ de vision.

Les informations nécessaires à la génération des images sont stockées en coordonnées cartésiennes sur la banque de données 67 et sont prélevées de cette banque de données pour être visualisées à l'écran en fonction des angles de vue, de la position et de la direction imprimée au véhicule simulé.

Compte tenu du fait que les images secondaires de rétrovision sont visualisées sur des petites portions de l'écran, ces images secondaires sont définies avec une résolution plus faible que celles des images frontales. De plus on peut utiliser des images plus stylisées pour les images de rétrovision que pour l'image frontale.

De fait, le calculateur génère l'image frontale et les images de rétrovision à partir de données issues de la base de données en fonction de la position simulée du véhicule dans le circuit routier, de sorte que la génération des images s'effectue en fonction de l'angle de vision correspondant sur le circuit routier, mais en utilisant la même base de données quelle que soit l'image considérée.

Ainsi les images de rétrovision étant générées sur des portions d'écran réduites par rapport à l'image frontale, elles présentent une résolution plus faible que cette dernière.

Le calculateur a la possibilité de visualiser des séquences d'images fixes ou animées, par exemple avec des graphismes en deux dimensions. Ces séquences seront surtout utilisées dans les premières leçons pour faire découvrir et expliquer à l'élève le fonctionnement des organes de commande de contrôle du véhicule. Le calculateur assure la prise en compte de l'état des différentes commandes sur lesquelles l'élève agit, telles que la clé de contact, les commandes d'éclairage et d'avertissement, la position du volant 11, des pédales, du levier de vitesse 13, du frein à main, de la ceinture de sécurité et du clavier de l'instructeur. Il effectue également la modélisation de la dynamique du véhicule en temps réel et la modélisation des fonctions moteur, boîte de vitesse, embrayage, freinage, adhérence, direction. Un tel traitement algorithmique permet de calculer à tout instant le nouvel état du véhicule, c'est-à-dire la position, l'orientation, la vitesse ainsi que l'état des différents instruments et indicateurs en fonction des commandes imprimées par l'élève, des conditions liées à l'environnement extérieur simulé et de l'état précédent du véhicule. Le calculateur assure également la génération des sorties, telles que la commande de l'indicateur de vitesse du tableau de bord, la génération des effets physiques dans le volant, l'allumage et l'extinction des voyants du tableau de bord, les sons propres à la conduite et les messages vocaux d'aide à l'instruction. La vitesse de traitement du calculateur est telle que les calculs ci-dessus peuvent se répéter 15 à 20 fois par seconde.

Le procédé et dispositif ainsi décrit permet d'obtenir une simulation plus proche des conditions réelles de la conduite automobile, notamment en reproduisant non seulement l'environnement qu'observerait le conducteur élève devant lui dans des conditions réelles, mais également en reproduisant l'environnement arrière du véhicule par l'intermédiaire des rétroviseurs.

## Revendications

1. Procédé pour l'entraînement à la conduite de véhicules, suivant lequel on réalise une vue frontale et au moins une vue de rétrovision simulées en visualisant sur des moyens d'écran (16, 38, 39) disposés face à un poste de pilotage (11 à 14, 20, 25, 26) pour un conducteur élève (17), une séquence d'images principales frontales (18), ainsi qu'au moins une séquence d'images secondaires de rétrovision (19, 22, 23), et on fait évoluer ces vues en fonction de commandes déterminées depuis ledit poste de pilotage, caractérisé en ce que lesdites images principales (18) et lesdites images secondaires (19, 22, 23) sont des images de synthèse générées par un calculateur (61 à 66, 68 à 70) à partir d'une base de données (67) contenant la description d'un circuit routier en trois dimensions ; on rend visible ladite vue de rétrovision simulée produite à partir de ladite séquence d'images secondaires (19, 22, 23), à l'aide d'un moyen matériel de simulation de rétroviseur (20, 25, 26) réglable en orientation, et on modifie ladite vue de rétrovision en fonction de l'orientation dudit moyen matériel de simulation de rétroviseur (20, 25, 26) de telle sorte que cette vue évolue sensiblement comme celle d'un rétroviseur réel de véhicule.

2. Procédé selon la revendication 1, caractérisé en ce que lesdites images secondaires de rétrovision (19, 22, 23) sont générées avec une résolution plus faible que la résolution avec laquelle sont générées les images principales (18).

3. Procédé selon la revendication 1 ou 2, caractérisé en ce que ladite séquence d'images secondaires (19, 22, 23) est visualisée sur une portion associée d'un écran frontal (16) d'où elle est prélevée optiquement et renvoyée optiquement vers un moyen matériel de simulation de rétroviseur associé (20, 25, 26).

4. Procédé selon l'une quelconque des revendications 1 à 3, caractérisé en ce que l'on génère une première séquence d'images secondaires (19) qui est une séquence d'images secondaires de rétrovision intérieure, constituée à partir d'informations correspondant à un champ de vision central à l'arrière du conducteur, que l'on visualise sur une première portion d'un écran frontal (16) d'où elle est renvoyée vers un premier moyen matériel de simulation de rétroviseur (20) réglable en orientation, simulant un rétroviseur central et/ou une deuxième séquence d'images secondaires de rétrovision extérieure (22), constituée à partir d'informations correspondant à un premier champ de vision latéral à l'arrière du conducteur (17) que l'on visualise sur une deuxième portion dudit écran frontal (16) d'où elle est renvoyée vers un deuxième moyen matériel de simulation de rétroviseur (25) réglable en orientation, simulant un premier rétroviseur latéral, et/ou une troisième séquence d'images secondaires de rétrovision (23), constituée à partir d'informations correspondant à un second champ de vision latéral à l'arrière du conducteur (17), que l'on visualise sur une troisième portion dudit écran frontal (16), d'où elle est renvoyée vers un troisième moyen matériel de simulation de rétroviseur (26), réglable en orientation, simulant un second rétroviseur latéral.

5. Dispositif pour l'entraînement à la conduite automobile comportant, face à un poste de pilotage (11 à 14, 20, 25, 26) pour un conducteur élève (17), au moins un écran (16) de visualisation d'images (18, 19, 22, 23), des premiers moyens de génération d'une séquence d'images principales frontales (18) en fonction des commandes dudit poste de pilotage, au moins des deuxièmes moyens de génération d'au moins une première séquence d'images secondaires de rétrovision (19) inscrustée dans ladite séquence d'images frontales sur une première portion dudit écran (16) et des premiers moyens optiques de prélèvement et de renvoi de ladite première séquence d'images secondaires (19) vers un premier moyen matériel de simulation de rétroviseur (20) simulant un rétroviseur central pour délivrer une vue de rétrovision centrale, caractérisé en ce que lesdites images sont générées par un calculateur (61 à 66, 68 à 70) à partir d'une base de données (67) contenant la description d'un circuit routier en trois dimensions, en ce que ledit premier moyen de simulation de rétroviseur (20) est réglable en orientation et en ce qu'il est associé à des moyens de réglage de vue sensibles à l'orientation de ce premier moyen pour modifier ladite vue de rétrovision centrale en fonction de ladite orientation.

6. Dispositif selon la revendication 5, caractérisé en ce qu'il comporte des troisièmes moyens de génération d'une deuxième séquence d'images secondaires de rétrovision (22) incrustée dans ladite séquence d'images frontales (18) sur une deuxième portion dudit écran (16) et des deuxièmes moyens optiques (24, 27, 29) de prélèvement et de renvoi de ladite deuxième séquence d'images secondaires (22) vers un deuxième moyen matériel de simulation de rétroviseur (25) réglable en orientation pour délivrer une première vue de rétrovision latérale simulant un premier rétroviseur latéral.

7. Dispositif selon la revendication 5 ou 6, caractérisé en ce qu'il comporte des quatrièmes moyens de génération d'une troisième séquence d'images secondaires de rétrovision (23) incrustée dans ladite séquence d'images frontales (18) sur une troisième portion dudit écran (16) et des troisièmes moyens optiques (24, 28, 30) de prélèvement et de renvoi de ladite troisième séquence d'images secondaires (23) vers un troisième moyen matériel de simulation de rétroviseur (26) réglable en orientation pour délivrer une deuxième vue de rétrovision latérale, ce troisième moyen simulant un second rétroviseur latéral et étant associé à des moyens de réglage de vue sensibles à son orientation pour modifier la vue de rétrovision qu'il délivre, en fonction de cette orientation.

8. Dispositif selon l'une des revendications 6 ou 7, caractérisé en ce que ledit écran (26) est intégré dans un carter (24) recouvrant l'écran en partie basse au niveau d'au moins une desdites portions d'écran d'affichage d'une séquence d'images secondaires (22, 23) et en ce que ledit carter (24) comporte au moins un miroir de renvoi (27, 28) de ladite séquence d'images secondaires (22, 23) vers ledit moyen matériel de simulation de rétroviseur (25, 26) associé à ladite séquence, simulant un rétroviseur latéral associé ; ledit carter (24) constituant lesdits moyens de prélèvement et de renvoi optique de ladite séquence d'images secondaires (22, 23).

9. Dispositif selon l'une quelconque des revendications 5 à 8, caractérisé en ce que ledit premier moyen matériel de simulation de rétroviseur (20) comporte une lentille de Fresnel ou un filtre directif.

10. Dispositif selon l'une quelconque des revendications 5 à 9, caractérisé en ce que les images secondaires (19, 22, 23) incrustées dans lesdites images principales (18) sont dimensionnées de sorte que ces images secondaires soient prélevées partiellement par lesdites moyens de prélèvement et de renvoi qui leur sont associés, permettant ainsi par le réglage en orientation d'un desdits moyens matériels de simulation de rétroviseur (20, 25, 26) de modifier la portion prélevée des images secondaires (19, 22, 23) qui leur sont associées.

11. Dispositif selon l'une quelconque des revendications 5 à 10, caractérisé en ce qu'il comprend en outre deux écrans latéraux (38, 39) disposés de part et d'autre du premier écran (16) et des cinquièmes moyens de génération sur ces écrans latéraux de séquences d'images principales latérales (40, 41) correspondant aux champs de vision latéraux du conducteur.

12. Dispositif selon l'une quelconque des revendications (5 à 11), caractérisé en ce qu'au moins un des moyens matériels de simulation de rétroviseur réglable en orientation est un écran supplémentaire de taille correspondant à celle d'un rétroviseur et en ce que la séquence d'images secondaires de rétrovision associée est générée directement sur l'écran supplémentaire à patir de ladite base de données (67).

## Patentansprüche

1. Verfahren zur Ausbildung zum Führen von Fahrzeugen, bei dem eine simulierte Frontalsicht und mindestens eine simulierte rückwärtige Sicht realisiert wird, indem auf Leinwand- oder Bildschirmmitteln (16, 38, 39), die gegenüber einem Fahrerplatz (11 bis 14, 20, 25, 26) für einen Fahrschüler (17) angeordnet sind, eine Abfolge von frontalen Hauptbildern (18) sowie mindestens eine Abfolge von rückwärtigen Sekundärbildern (19, 22, 23) sichtbar gemacht werden, und bei dem diese Ansichten in Abhängigkeit von Steuerbefehlen entwickelt werden, die von dem genannten Fahrerplatz vorgegeben werden, dadurch gekennzeichnet, daß die genannten Hauptbilder (18) und die genannten Sekundärbilder (19, 22, 23) von einem Rechner (61 bis 66, 68 bis 70) auf der Grundlage einer Datenbank (67) synthetisch erzeugte Bilder sind, wobei die Datenbank die dreidimensionale Beschreibung einer Fahrstrecke enthält; die genannte simulierte rückwärtige Sicht, erzeugt aus der genannten Sekundärbildabfolge (19, 22, 23), wird mittels eines ausrichtbaren materiellen Mittels, das einen Rückspiegel simuliert (Rückspiegelsimulationsmittels) (20, 25, 26), sichtbar gemacht, und die genannte rückwärtige Sicht wird in Abhängigkeit von der Ausrichtung des genannten materiellen Rückspiegelsimulationsmittels (20, 25, 26) derart modifiziert, daß diese Sicht sich erkennbar wie in einem echten Fahrzeugrückspiegel entwickelt.

2. Verfahren nach Anspruch 1, dadurch gekennzeichnet, daß die genannten rückwärtigen Sekundärbilder (19, 22, 23) mit einer geringeren Auflösung erzeugt werden, als die Auflösung, mit der die Hauptbilder (18) erzeugt werden.

3. Verfahren nach Anspruch 1 oder 2, dadurch gekennzeichnet, daß die genannte Sekundärbildabfolge (19, 22, 23) auf einem Teilbereich eines Frontalbildschirms (16) sichtbar gemacht wird, von dem sie optisch eingefangen und auf ein zugehöriges materielles Rückspiegelsimulationsmittel (20, 25, 26) optisch reflektiert wird.

4. Verfahren nach einem der Ansprüche 1 bis 3, dadurch gekennzeichnet, daß eine erste Sekundärbildabfolge (19) erzeugt wird, die eine Sekundärbildabfolge einer inneren rückwärtigen Sicht ist, hervorgehend aus Informationen, die einem zentralen Blickfeld hinter dem Fahrer entsprechen, die auf einem ersten Teilbereich eines Frontalbildschirms (16) sichtbar gemacht wird, von wo sie auf ein erstes ausrichtbares materielles Rückspiegelsimulationsmittel (20) reflektiert wird, das einen zentralen Rückspiegel simuliert und/oder daß eine zweite Sekundärbildabfolge einer äußeren rückwärtigen Sicht (22) aus Informationen erzeugt wird, die einem ersten seitlichen Blickfeld hinter dem Fahrer (17) entsprechen, die auf einem zweiten Teilbereich des genannten Frontalbildschirms (16) sichtbar gemacht wird, von wo sie auf ein zweites ausrichtbares materielles Rückspiegelsimulationsmittel (25) reflektiert wird, das einen ersten Seitenrückspiegel simuliert, und/oder daß eine dritte Sekundärbildabfolge einer rückwärtigen Sicht (23) aus Informationen erzeugt wird, die einem zweiten seitlichen Blickfeld hinter dem Fahrer (17) entsprechen, die auf einem dritten Teilbereich des genannten Frontalbildschirms (16) sichtbar gemacht wird, von wo sie auf ein drittes ausrichtbares materielles Rückspiegelsimulationsmittel (26) reflektiert wird, das einen zweiten Seitenrückspiegel simuliert.

5. Vorrichtung für die Ausbildung zum Führen eines Kraftfahrzeugs, die gegenüber einem Fahrerplatz (11 bis 14, 20, 25, 26) für einen Fahrschüler (17) folgendes aufweist: mindestens einen Bildschirm (16) zur Bildvisualisierung (18, 19, 22, 23), erste Mittel zur Erzeugung einer frontalen Hauptbildabfolge (18), die von den Steuerbefehlen abhängig ist, die von dem genannten Fahrerplatz vorgegeben werden, mindestens zweite Mittel zur Erzeugung mindestens einer ersten rückwärtigen Sekundärbildabfolge (19), die in die genannte Frontalbildabfolge auf einem ersten Teilbereich des genannten Bildschirms (16) integriert ist, und erste optische Mittel zum Einfangen und zur Reflexion der genannten ersten Sekundärbildabfolge (19) auf ein erstes materielles Rückspiegelsimulationsmittel (20), das einen zentralen Rückspiegel simuliert, um eine zentrale rückwärtige Sicht zu liefern, dadurch gekennzeichnet, daß die genannten Bilder von einem Rechner (61 bis 66, 68 bis 70) auf der Grundlage einer Datenbank (67) erzeugt werden, wobei die Datenbank eine dreidimensionale Beschreibung einer Fahrstrecke enthält, daß das genannte erste Rückspiegelsimulationsmittel (20) ausrichtbar ist und daß es mit Sichteinstellmitteln verbunden ist, die für die Ausrichtung dieses ersten Mittels empfindlich sind, und so die genannte zentrale rückwärtige Sicht in Abhängigkeit von der genannten Ausrichtung verändern.

6. Vorrichtung nach Anspruch 5, dadurch gekennzeichnet, daß sie folgendes aufweist: dritte Mittel zur Erzeugung einer zweiten rückwärtigen Sekundärbildabfolge (22), die in die genannte Frontalbildabfolge (18) auf einem zweiten Teilbereich des genannten Bildschirms (16) integriert ist, und zweite optische Mittel (24, 27, 29) zum Einfangen und zur Reflexion der genannten zweiten Sekundärbildabfolge (22) auf ein zweites ausrichtbares materielles Rückspiegelsimulationsmittel (25), um eine erste seitliche rückwärtige Sicht zu liefern, die einen ersten Seitenrückspiegel simuliert.

7. Vorrichtung nach Anspruch 5 oder 6, dadurch gekennzeichnet, daß sie folgendes aufweist: vierte Mittel zur Erzeugung einer dritten rückwärtigen Sekundärbildabfolge (23), die in die genannte Frontalbildabfolge (18) auf einem dritten Teilbereich des genannten Bildschirms (16) integriert ist, und dritte optische Mittel (24, 28, 30) zum Einfangen und zur Reflexion der genannten dritten Sekundärbildabfolge (23) auf ein drittes ausrichtbares materielles Rückspiegelsimulationsmittel (26), um ein zweite seitliche rückwärtige Sicht zu liefern, wobei dieses dritte Mittel einen zweiten Seitenrückspiegel simuliert und mit Sichteinstellmitteln verbunden ist, die für seine Ausrichtung empfindlich sind, und so die von ihm gelieferte rückwärtige Sicht in Abhängigkeit von dieser Ausrichtung verändert.

8. Vorrichtung nach einem der Ansprüche 6 oder 7, dadurch gekennzeichnet, daß der genannte Bildschirm (26) in ein Gehäuse (24) integriert ist, das den Bildschirm im unteren Teil auf der Höhe von mindestens einem der genannten Bildschirmteilbereiche für die Anzeige einer Sekundärbildabfolge (22, 23) verdeckt, und daß das genannte Gehäuse (24) mindestens einen Spiegel (27, 28) zur Reflexion der genannten Sekundärbildabfolge (22, 23) in Richtung auf das der genannten Bildabfolge zugehörige materielle Rückspiegelsimulationsmittel (25, 26) aufweist, das einen dazugehörigen Seitenrückspiegel simuliert; das genannte Gehäuse (24) bildet dabei die genannten Mittel zum optischen Einfangen und zur optischen Reflexion der genannten Sekundärbildabfolge (22, 23) aus.

9. Vorrichtung nach einem der Ansprüche 5 bis 8, dadurch gekennzeichnet, daß das genannte erste materielle Rückspiegelsimulationsmittel (20) eine Fresnellinse oder einen Richtungsfilter aufweist.

10. Vorrichtung nach einem der Ansprüche 5 bis 9, dadurch gekennzeichnet, daß die Sekundärbilder (19, 22, 23), integriert in die genannten Hauptbilder (18), derart dimensioniert sind, daß diese Sekundärbilder mit Hilfe der ihnen zugehörigen genannten Mittel zum Einfangen und zur Reflexion teilweise eingefangen werden, so daß es möglich wird, durch die Ausrichtung eines der genannten materiellen Rückspiegelsimulationsmittel (20, 25, 26) den eingefangenen Teilbereich der ihnen zugehörigen Sekundärbilder (19, 22, 23) zu verändern.

11. Vorrichtung nach einem der Ansprüche 5 bis 10, dadurch gekennzeichnet, daß sie darüber hinaus folgendes aufweist: zwei seitliche Bildschirme (38, 39), die zu beiden Seiten des ersten Bildschirms (16) angeordnet sind, und fünfte Mittel zur Erzeugung von seitlichen Hauptbildabfolgen (40, 41) auf diesen seitlichen Bildschirmen, die den seitlichen Blickfeldern des Fahrers entsprechen.

12. Vorrichtung nach einem der Ansprüche (5 bis 11), dadurch gekennzeichnet, daß mindestens eines der ausrichtbaren materiellen Rückspiegelsimulationsmittel ein zusätzlicher Bildschirm von der Größe ist, die einem Rückspiegel entspricht, und daß die zugehörige rückwärtige Sekundärbildabfolge auf der Grundlage der genannten Datenbank (67) direkt auf dem zusätzlichen Bildschirm erzeugt wird.

## Claims

1. Method for training in the driving of vehicles, in which a front view and at least one rear vision view are simulated by displaying on screen means (16, 38, 39) placed opposite to a driving station (11 to 14, 20, 25, 26) for a trainee driver (17), a sequence of front main images (18) and at least one sequence of rear vision secondary images (19, 22, 23) and are able to change in accordance with controls initiated from said driving system, characterized in that said main images (18) and said secondary images (19, 22, 23) are synthetic images generated by a computer (61 to 66, 68 to 70) from a data base (67) containing the description of a three-dimensional road circuit; said simulated rear vision view generated from said sequence of secondary images (19, 22, 23) is made visible through a material mean of simulation of rear-view mirror (20, 25, 26), adjustable in orientation, and said rear vision view is modified in accordance with the orientation of said material mean of simulation of rear-view mirror (20, 25, 26) so that this view changes approximately as the one of a real rear-view mirror of vehicle.

2. Method according to claim 1, characterized in that said rear vision secondary images (19, 22, 23) are generated with lower resolution than the resolution with which the main images (18) are generated.

3. Method according to claim 1 or 2, characterized in that said sequence of secondary images (19, 22, 23) are displayed on an associated portion of front screen (16) from which it is collected optically and reflected optically to an associated material mean of simulation of rear-view mirror (20, 25, 26).

4. Method according to any one of claims 1 to 3, characterized in that there is thus generated a first sequence of secondary images (19) which is a sequence of inner rear vision secondary images, formed from informations corresponding to a central field of view behind the driver and displayed on a first portion of a front screen (16) from which it is reflected to a first material mean of simulation of rear-view mirror (20), adjustable in orientation, simulating a central rear-view mirror and/or a second sequence of outer rear vision secondary images (22), formed from informations corresponding to a first lateral field of view behind the driver (17) which is displayed on a second portion of said front screen (16) from which it is reflected to a second material mean of simulation of rear-view mirror (25), adjustable in orientation, simulating a first lateral rear-view mirror, and/or a third sequence of rear vision secondary images (23), formed from informations corresponding to a second lateral field of view behind the driver (17) which is displayed on a third portion of said front screen (16) from which it is reflected to a third material mean of simulation of rear-view mirror (26), adjustable in orientation, simulating a second lateral rear-view mirror.

5. Device for training in the driving of motor vehicles comprising, opposite to a driving station (11 to 14, 20, 25, 26) for a trainee driver (17), at least one visualisation screen (16) of images (18, 19, 22, 23), first means for generating a sequence of front main images (18) in accordance with controls of said driving station, at least second means for generating at least a first sequence of rear vision secondary images (19) inserted in said sequence of front images on a first portion of said screen (16) and first optical means for collecting and reflecting said first sequence of secondary images (19) to a first material mean of simulation of rear-view mirror (20), simulating a central rear-view mirror to provide a front rear-vision view, characterized in that said images are generated by a computer (61 to 66, 68 to 70) from a data base (67) containing the description of a three-dimensional road circuit, in that said first mean of simulation of rear-view mirror (20) is adjustable in orientation and in that it is associated with adjustment means of view which are sensitive to the orientation of said first mean to modify said front rear-vision view in accordance with said orientation.

6. Device according to claim 5, characterized in that it comprises third means for generating a second sequence of rear vision secondary images (22) inserted in said sequence of front images (18) on a second portion of said screen (16) and second optical means (24, 27, 29) for collecting and reflecting said second sequence of secondary images (22) to a second material mean of simulation of rear-view mirror (25), adjustable in orientation to provide a first lateral rear vision view simulating a first lateral rear-view mirror.

7. Device according to claim 5 or claim 6, characterized in that it comprises fourth means for generating a third sequence of rear vision secondary images (23) inserted in said sequence of front images (18) on a third portion of said screen (16) and third optical means (24, 28, 30) for collecting and reflecting said third sequence of secondary images (23) to a third material mean of simulation of rear-view mirror (26), adjustable in orientation, to provide a second lateral rear vision view, this third mean simulating a second lateral rear-view mirror and being associated with adjustment means of view which are sensitive to its orientation to modify the rear vision view that it provides in accordance with this orientation.

8. Device according to claim 6 or 7, characterized in that said screen (16) is integrated in a casing (24) which covers the lower part of the screen at the level of at least one of said screen portions for displaying a sequence of secondary images (22, 23) and that said casing (24) comprises at least one mirror (27, 28) for reflecting said sequence of secondary images (22, 23) to said material mean of simulation of rear-view mirror (25, 26) associated with said sequence, simulating an associated lateral rear-view mirror, said casing (24) constituting said means for optical collection and reflection of said sequence of secondary images (22, 23).

9. Device according to any one of claims 5 to 8, characterized in that said first material mean of simulation of rear-view mirror (20) comprises a Fresnel lens or a directional filter.

10. Device according to any one of claims 5 to 9, characterized in that the secondary images (19, 22, 23) inserted in said main images (18) are so dimensioned that these secondary images are partly collected by said collecting and reflecting means which are associated therewith, thus permitting by the adjustment in orientation of one of said material means of simulation of rear-view mirror (20, 25, 26) to modify the collected portion of the secondary image (19, 22, 23) which are associated therewith.

11. Device according to any one of claims 5 to 10, characterized in that it comprises moreover two lateral screens (38, 39) placed on both sides of the first screen (16) and fifth means for generating on these lateral screens, sequences of lateral main images (40, 41) corresponding to the lateral fields of view of the driver.

12. Device according to any one of claims 5 to 11, characterized in that at least one of the material means of simulation of the rear-view mirror, adjustable in orientation, is an additional screen corresponding in size to a rear-view mirror and that the associated sequence of rear vision secondary images is generated directly on the additional screen from said data base (67).
